# EUROPÄISCHE PATENTSCHRIFT

(11) **EP 1 262 010 B1**
(45) Veröffentlichungstag und Bekanntmachung des Hinweises auf die Patenterteilung: **19.04.2006**
(21) Anmeldenummer: 01913525.0
(22) Anmeldetag: 20.01.2001
(51) Int. Cl.: H02K 11/00

(54) **DREHMOTOR**
TORQUE MOTOR
MOTEUR-COUPLE

(30) Priorität: 09.03.2000 DE 10011591
(43) Veröffentlichungstag der Anmeldung: 04.12.2002
(73) Patentinhaber: Howaldtswerke-Deutsche Werft GmbH, 24143 Kiel (DE)
(72) Erfinder: RITTERHOFF, Jürgen, 23611 Bad Schwartau (DE)
(74) Vertreter: Köckeritz, Günter
(86) Internationale Anmeldenummer: PCT/DE2001/000243
(87) Internationale Veröffentlichungsnummer: WO 2001/067581

(56) Entgegenhaltungen:
- US-A- 5 678 647
- US-A- 5 741 605
- US-A- 5 923 106
- PATENT ABSTRACTS OF JAPAN vol. 2000, no. 01, 31. Januar 2000 (2000-01-31) & JP 11 283654 A (YAMAGUCHI TAKASHI), 15. Oktober 1999 (1999-10-15)

## Beschreibung

Die Erfindung betrifft einen Drehmotor, insbesondere einen Brennstoffzellen-Drehmotor, der die chemisch gespeicherte Energie flüssiger oder gasförmiger Brennstoffe direkt innerhalb des Drehmotors unter Umgehung separater Geräteaufstellung in mechanische Energie zum Antrieb mindestens eines Verbrauchers umwandelt.

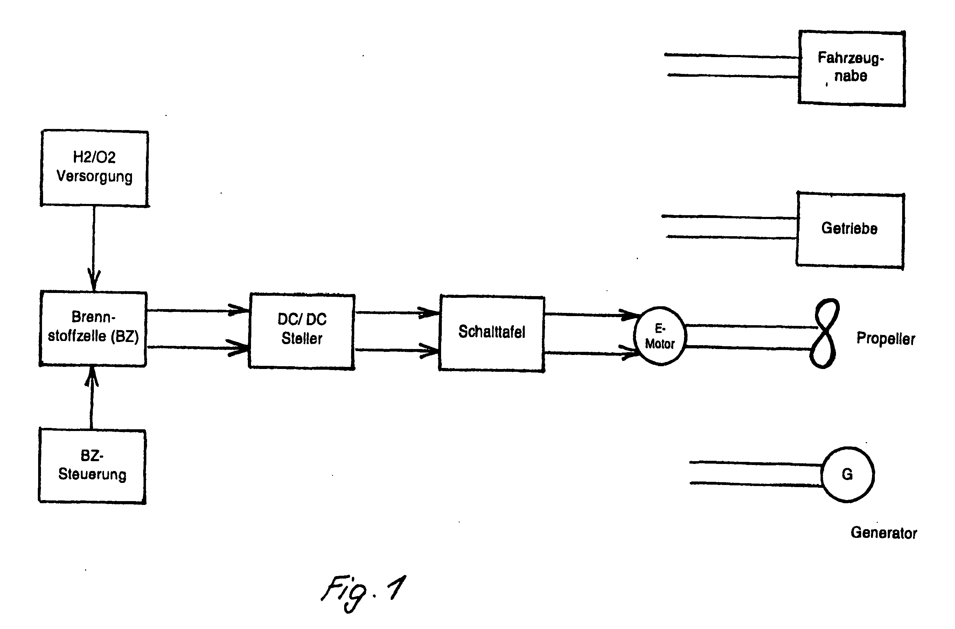

Stand der Technik ist es, die aus chemisch gespeicherter Energie flüssiger oder gasförmiger Brennstoffe in einer separat aufgestellten Brennstoffzellenanlage, bestehend aus:
- Brennstoffzelle-Stack,
- Versorgungsmodul aus H₂- und O₂- Gasspeicher,
- elektrischer Schalt- und Überwachungsanlage,
- DC/DC-Steller/DC/AC-Steller,
erzeugte elektrische Energie über eine elektrische Kabel- oder Schienenanlage einem hiervon getrennt aufgestellten konventionellen DC- oder Umrichter gesteuerten AC-Motor zuzuführen, der dann den Drehantrieb des Verbrauchers (Generator für Stromerzeugung, Propellerwelle für Schiffsantrieb oder Getriebe- oder Nabenwelle für den Achsenantrieb von Fahrzeugen) besorgt (Fig.1).

Die chemisch in H₂/O₂ gebundene Energie soll möglichst verlustfrei über Energiewandlung dem Verbraucher, der Arbeitsmaschine, zugeführt werden.

Brennstoffzellen wandeln direkt (ohne Verbrennungskraftmaschine/Generator) die chemisch gebundene Energie in elektrische Energie um. Permanentmagnet erregte Elektromotoren wandeln elektrische Energie bei hohem Wirkungsgrad in mechanische Rotationsenergie ohne Erregerverluste um.

In der US-A-59 231 06 wird ein Gleichstrommotor mit einer integrierten Brennstoffzelle beschrieben. Im Stator sind Brennstoffzellen angeordnet, wobei der Rotor außerhalb des Stators angeordnet ist.

Nachteil des Standes der Technik besteht in der aufwendigen leitungsgebundenen und verlustbehafteten Übertragung der in den Brennstoffzellen (Energiewandler 1: chemische Energie in elektrischen Strom) erzeugten Leistung (DC-Strom) über Leitungskabel, Schalt- und Sicherungsvorrichtungen an den konventionell getrennt aufgebauten E-Motor (Energiewandler 2: elektrische Energie in mechanische Energie).

Aufgabe der Erfindung ist es deshalb, die chemisch gebundene Energie direkt in mechanische Drehenergie umzuwandeln. Erfindungsgemäß wird diese Aufgabe durch die Merkmale der Ansprüche 1 bis 5 gelöst, in denen eine Integration der beiden Energiewandler in einem kompakten Energiewandler vorgesehen ist.

Der Drehmotor ist danach mit Brennstoffzellen als interne Energiequelle versehen, wobei diese im Stator ringförmig um die Drehachse des Motors angeordnet sind. Nach dem wesentlichen Merkmal der Erfindung besteht der Motor aus Rotor und Stator mit auf dem Rotor angeordneten Permanentmagneten und im Stator befindlichen Ankerwindungen, die von einem Kommutator mit leistungelektronischen Bauteilen gespeist werden, wobei im Kommutator Brennstoffzellenmodule und Brennstoffzellenversorgungs- und Steuerelemente baulich modulhaft integriert sind.
Auf der Drehachse des Brennstoffzellen-Drehmotors sind die Permanentmagnete nach einem weiteren Merkmal in Trommel- oder Scheibenbauart rotationssymmetrisch angeordnet, wobei eine externe Erregung des elektrischen Drehmotors im Rotor entfällt.
Die Ankerstromerzeugung und Kommutierung erfolgen nach einem anderen Merkmal im Stator des Drehmotors, wobei diese direkt von den Brennstoffzellen-Modulen elektrisch gespeist werden, die jeweils modulhaft den Statorpaketen zugeordnet sind.

Die Steuerung und Regelung des Brennstoffzellenprozesses und die Elektromotor-Leistungs- und/oder Drehzahlregelung sind nach einem bevorzugten Merkmal der Erfindung räumlich im Stator des Drehmotors integriert.

Kompakte, permanent erregte Motoren führen auf dem rotierenden Teil nur die Permanentmagnete ohne eine externe Energiezuführung. Im Stator befinden sich die Ankerwindungen, die von modular aufgebauter Leistungselektronik bzgl. Ankerstromleistung, -taktung, -richtung gespeist werden. Diese Leistungselektronik-Module enthalten baulich integrierte Brennstoffzellen-Module, die ihre elektrische Ausgangsleistung in Form von Gleichstrom direkt in die Leistungselektronik-Module einspeisen. Der elektrische Gleichstrom wird dem ebenfalls ringförmig im inneren Kreis angeordneten und elektrisch gekoppelten Kommutator mit leistungselektronischen Bauteilen zugeführt. Durch Einfügen der Brennstoffzellen-Module in den internen Aufbau des Motors werden externe elektrische/magnetische Verluste vermieden und die Baugröße bzw. das Gewicht verkleinert. Der direkte Energiewandler ohne weitere verlustbehaftete Zwischenschritte begünstigt die Einführung vieler weiterer Brennstoffzellen-Anwendungen im mobilen Bereich von Fahrzeugen zu Lande, zu Wasser und in der Luft.

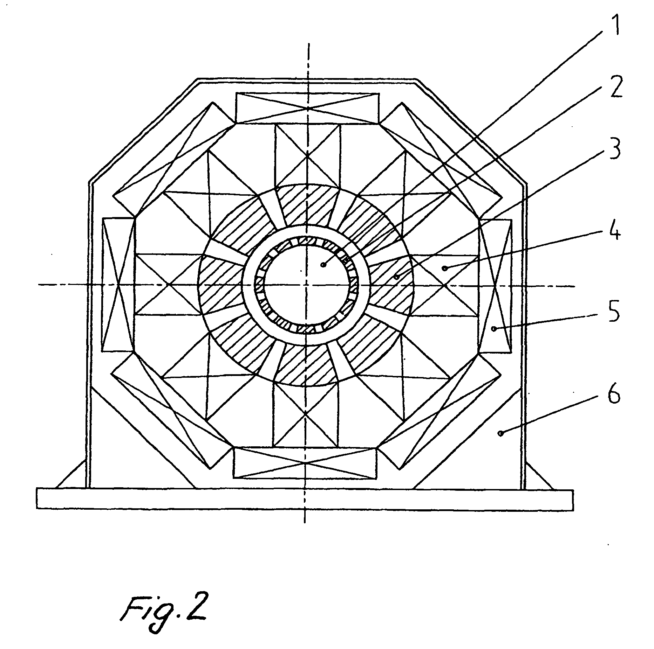

Die Figur 2 zeigt den Brennstoffzellen-Drehmotor in Schnittdarstellung.

Der Drehmotor besteht aus Rotor 1 und Stator 6 mit auf dem Rotor 1 angeordneten Permanentmagneten 2 und im Stator 6 befindlichen Ankerwindungen, die von einem Kommutator 3 mit leistungelektronischen Bauteilen gespeist werden, wobei im Kommutator 3 die Brennstoffzellenmodule 4 und Brennstoffzellenversorgungs- und Steuerelemente 5 baulich modulhaft integriert sind.

Auf der Drehachse des Brennstoffzellen-Drehmotors sind die Permanentmagnete 2 in Trommel- oder Scheibenbauart rotationssymmetrisch angeordnet. Eine externe Erregung des elektrischen Drehmotors im Rotor 1 entfällt.

Die Ankerstromerzeugung und Kommutierung erfolgen im Stator 6 des Drehmotors, wobei diese direkt von den Brennstoffzellen-Modulen 4 elektrisch gespeist werden, die jeweils modulhaft den Statorpaketen zugeordnet sind.

Die Steuerung und Regelung des Brennstoffzellenprozesses und die Elektromotor-Leistungs- und/oder Drehzahlregelung sind räumlich im Stator 6 integriert.
Die Brennstoffzellen-Elektronikmodule werden gespeist durch Zuführung von H₂ als Brennstoff und O₂ oder Luft als Oxidant und erzeugen die gerichtete und gelenkte Leistung für den Anker sowie Wasser als Produkt.
Die bei der direkten Brennstoffzellen-Energiewandlung erzeugten Verluste werden mit dem Produktwasser und evtl. durch Kühlwasser, das durch die Brennstoffzellen-Stacks fließt, abgeführt. Alle wasserführenden Teile sind allein im festen, nicht rotierenden Teil des Drehmotors angebracht.

## Patentansprüche

1. Drehmotor, bestehend aus Rotor (1) und Stator (6) mit auf dem Rotor (1) angeordneten Permanentmagneten (2) und im Stator befindlichen Ankerwindungen, sowie Brennstoffzellen (4) als interne Energiequelle, **dadurch gekennzeichnet, dass** die Ankerwindungen von einem Kommutator (3) mit leistungselektronischen Bauteilen gespeist werden und die gennanten Brennstoffzellen (4) und Brennstoffzellenversorgungs- und Steuerelemente im Kommutator (5) baulich modulhaft integriert sind.

2. Drehmotor nach Anspruch 1, **dadurch gekennzeichnet, dass** die Brennstoffzellen (4) ringförmig um die Drehachse des Motors angeordnet sind.

3. Drehmotor nach einem der o. g. Ansprüche, **dadurch gekennzeichnet, dass** auf der Drehachse des Motors die Permanentmagnete (2) in Trommel- oder Scheibenbauart rotationssymmetrisch angeordnet sind und eine externe Erregung des elektrischen Drehmotors im Rotor (1) entfällt.

4. Drehmotor nach einem der o. g. Ansprüche, **dadurch gekennzeichnet, dass** die Ankerstromerzeugung und Kommutierung im Stator (6) des Drehmotors erfolgen, wobei diese direkt von den Brennstoffzellen-Modulen (4) elektrisch gespeist werden, die jeweils moduthaft den Statorpaketen zugeordnet sind.

5. Drehmotor nach einem der o. g. Ansprüche, **dadurch gekennzeichnet, dass** die Steuerung und Regelung des Brennstoffzellenprozesses und die Elektromotor-Leistungs- und/oder Drehzahlregelung räumlich im Stator (6) integriert sind.

## Claims

1. Torque motor, comprising a rotor (1) and a stator (6) with permanent magnets (2) arranged on the rotor (1) and armature windings located in the stator, as well as fuel cells (4) as an internal energy source, **characterised in that** the armature windings are fed from a commutator (3) which has power-electronic components and the said fuel cells (4) and fuel cell supply and control elements (5) being structurally integrated in the commutator (3) as modules.

2. Torque motor according to claim 1, **characterised in that** the fuel cells (4) are arranged in an annular manner around the rotational axis of the motor.

3. Torque motor according to one of the above-mentioned claims, **characterised in that** the permanent magnets (2) are arranged rotationally symmetrical on the rotational axis of the motor in a drum-like or disc-like design and there is no external excitation of the electric torque motor in the rotor (1).

4. Torque motor according to one of the above-mentioned claims, **characterised in that** the generation of the armature current and the commutation are carried out in the stator (6) of the torque motor, these being fed electrically directly from the fuel cell modules (4) which are respectively associated as modules with the stator packs.

5. Torque motor according to one of the above-mentioned claims, **characterised in that** the control and regulation for the fuel cell process and the electric motor power and/or rotational speed regulation are physically integrated in the stator (6).

## Revendications

1. Moteur-couple, constitué d'un rotor (1) et d'un stator (6) comprenant des aimants permanents (2) disposés sur le rotor (1) et des enroulements d'induit situés dans le stator ainsi que des piles à combustible (4) comme source d'énergie interne, **caractérisé en ce que** les enroulements d'induit sont alimentés par un commutateur (3) doté de composants d'électronique de puissance, et les piles à combustible (4) citées et les éléments d'alimentation et de commande des piles à combustible sont intégrés dans le commutateur (3) selon une construction modulaire (5).

2. Moteur-couple selon la revendication 1, **caractérisé en ce que** les piles à combustible (4) sont disposées de façon annulaire autour de l'axe de rotation du moteur.

3. Moteur-couple selon l'une quelconque des revendications précédentes, **caractérisé en ce que**, sur l'axe de rotation du moteur, les aimants permanents (2) sont disposés à symétrie de révolution dans un type de construction en tambour ou en disque et il n'existe pas d'excitation externe du moteur couple électrique dans le rotor (1).

4. Moteur-couple selon l'une quelconque des revendications précédentes, **caractérisé en ce que** la génération du courant d'induit et la commutation s'effectuent dans le stator (6) du moteur-couple, celles-ci étant alimentées électriquement directement par les modules de piles à combustible (4), qui sont associés respectivement de façon modulaire aux paquets de stator.

5. Moteur-couple selon l'une quelconque des revendications précédentes, **caractérisé en ce que** la commande et la régulation du processus de pile à combustible et la régulation de la puissance et/ou du régime du moteur électrique sont intégrées dans l'espace dans le stator (6).
